# EUROPÄISCHE PATENTSCHRIFT

(11) **EP 0 654 566 B1**
(45) Veröffentlichungstag und Bekanntmachung des Hinweises auf die Patenterteilung: **22.05.1996**
(21) Anmeldenummer: 94116212.5
(22) Anmeldetag: 14.10.1994
(51) Int. Cl.: E04B 2/74, B32B 13/14, B32B 7/08, B32B 33/00

(54) **Brandwand mit Gipsbauplatte**
Fire wall with gypsum board
Mur coupe-feu avec panneau de plâtre

(30) Priorität: 20.10.1993 DE 9316000 U
(43) Veröffentlichungstag der Anmeldung: 24.05.1995
(73) Patentinhaber: Gebr. Knauf Westdeutsche Gipswerke, D-97346 Iphofen (DE)
(72) Erfinder: Hünting, Harald, D-97332 Volkach (DE); Neuhof, Hans, D-97355 Castell (DE)
(74) Vertreter: Böhme, Volker, Dipl.-Ing.

(56) Entgegenhaltungen:
- EP-A- 0 069 698
- EP-A- 0 512 411
- WO-A-91/11323
- WO-A-92/02695
- CA-A- 960 014
- DE-A- 2 005 219
- DE-A- 2 611 033
- DE-U- 8 532 239

## Beschreibung

Die Neuerung betrifft eine Brandwand mit Gipsbauplatten, bei der Ständerprofile aus Blech an mindestens einer Seite mit einer Wandschale versehen sind, die eine innere, an den Ständerprofilen anliegende Gipsbauplatte und eine äußere Gipsbauplatte aufweist, deren Innenseite an einem zwischengeordneten Stahlblech anliegt und bei der die innere Gipsbauplatte mit inneren Schrauben an die Ständerprofile geschraubt ist und die äußere Gipsbauplatte von äußeren Bolzenmitteln gehalten ist, die durch die äußere Gipsbauplatte und das Stahlblech in die innere Gipsbauplatte ragen.

Bei einer bekannten (DE-GM 93 07 600) Brandwand dieser Art sind die Gipsbauplatten Gipsfaserplatten. Gipsfaserplatten sind nicht ummantelt, d.h. nicht mit Decklagen versehen und sind im Gefüge relativ fest sowie schwer, d.h. weisen ein relativ großes spezifisches Gewicht auf, das z.B. bei 1200 kg/m³ liegt. Bei der bekannten Brandwand sind die Bolzenmittel für die äußere Gipsbauplatte und das Stahlblech Stahlklammern, die eingetrieben sind und in der inneren Gipsbauplatte enden, d.h. nicht das Ständerprofil durchdringen. Durch die relativ schweren Gipsfaserplatten wird das Gesamtgewicht der Brandwand relativ groß, was in vielen Einsatzfällen nachteilig ist.

Eine Aufgabe der Neuerung ist es daher, eine Brandwand der eingangs genannten Art zu schaffen, die aus spezifisch leichteren Gipsbauplatten als Gipsfaserplatten besteht und dennoch die von einer Brandwand geforderte Brandfall-Stoßfestigkeit aufweist sowie eine stabile Befestigung der äußeren Gipsbauplatten und des Stahlblechs aufweist. Die neuerungsgemäße Brandwand ist, diese Aufgabe lösend, dadurch gekennzeichnet, daß die Gipsbauplatten von der Art der beidseitig mit Decklagen versehenen Gipsbauplatten sind und die äußeren Bolzenmittel Schrauben sind, die durch die innere Gipsbauplatte hindurch an die Ständerprofile geschraubt sind.

Beidseitig mit Decklagen versehenen Gipsbauplatten, nämlich Gipskartonplatten und Gipsbauplatten mit Decklagen, die von einem Glasfaservlies oder einem Glasfaservliesgelege gebildet sind, sind ihrer Art nach spezifisch leichter als Gipsfaserplatten. Das spezifische Gewicht ist in der Regel gleich oder kleiner 1000 kg/m³. Um die äußere mit Decklagen versehene Gipsbauplatte und das Stahlblech ausreichend sicher an den Ständerprofilen zu befestigen, sind Schrauben verwendet und sind diese Schrauben auch in die Ständerprofile geschraubt.

Jede Wandschale der neuerungsgemäßen Brandwand weist z.B. drei Gipskartonplatten auf, wobei die mittlere Gipskartonplatte einerseits an der inneren Gipskartonplatte und andererseits an dem Stahlblech anliegt. Besonders zweckmäßig und vorteilhaft ist es jedoch, wenn das zwischengeordnete Stahlblech jeweils nach innen hin an der inneren Gipsbauplatte anliegt und die Decklagen der Gipsbauplatten jeweils von Glasfaservlies oder -vliesgelege gebildet sind. Bei Verwendung der mit Glasfaservlies oder -vliesgelege abgedeckten Gipsbauplatten genügen also zwei Gipsbauplatten, um die von einer Brandwand geforderte Stoßfestigkeit zu gewährleisten. Das Glasfaservlies/ -vliesgelege kann nach außen hin mit einer abdeckenden Stuckgipsschicht versehen sein.

Besonders zweckmäßig und vorteilhaft ist es auch, wenn über die Länge jedes Ständerprofils mindestens zwei, einander benachbarte Streifen von Stahlblech vorgesehen sind und diese beiden Stahlblech-Streifen sich, in Richtung der Länge gesehen, einander überlappen. Durch diese Gestaltung wird ein verbesserter Halt der horizontal verlaufenden Stahlblech-Streifen mittels der äußeren Schrauben erreicht. Eine der Schrauben wird in dem oder nahe dem Überlappungsbereich angeordnet sein und es kann keine Schraube in eine Lücke zwischen zwei Stahlblech-Streifen angeordnet sein.

Besonders zweckmäßig und vorteilhaft ist es weiterhin, wenn der Abstand zweier benachbarter äußerer Schrauben voneinander beachtlich kleiner ist als der Abstand zweier benachbarter innerer Schrauben voneinander. Der innere Zusammenhalt der Wandschale und deren Befestigung an den Ständerprofilen wird durch die äußeren, einander eng benachbarten Schrauben gewährleistet.

Besonders zweckmäßig und vorteilhaft ist es noch, wenn der Raum zwischen zwei benachbarten Ständerprofilen mit einer nicht brennbaren oder schwer entflammbaren Füllstoffmatte versehen ist. Diese Füllstoffmatte fördert die schalldämmende und die hitzedämmende Wirkung der Brandwand.

In der Zeichnung sind bevorzugte Ausführungsformen der Neuerung dargestellt und zeigt
- Fig. 1: einen waagerechten Schnitt eines Teils einer ersten Brandwand mit Gipsbauplatten,
- Fig.2: einen senkrechten Schnitt der Darstellung in Fig. 1 und
- Fig.3: einen waagerechten Schnitt eines Teils einer zweiten Brandwand mit Gipsbauplatten.

Die beiden Brandwände gemäß Zeichnung weisen jeweils C-förmige Ständerprofile 1 auf, deren Blech 0,6 mm dick ist. Diese Ständerprofile 1 werden mit nicht gezeigten Anschlußprofilen, die an einem Boden und einer Decke eines Raumes angebracht sind, vernietet. Der Wandhohlraum zwischen je zwei benachbarten Ständerprofilen 1 ist mit nicht brennbarer Füllstoffmatte 2 besetzt, die aus Mineralfaser besteht. Die Ständerprofile 1 sind an jeder der beiden Seiten mit einer Wandschale 3 versehen, so daß eine zweischalige Brandwand vorliegt. Für die Wandschalen 3 werden Schrauben verwendet, die als Schnellbauschrauben ausgebildet sind. Jede Wandschale 3 ist aus Gipsbauplatten geschichtet, wobei eine äußere Gipsbauplatte 4 und eine innere Gipsbauplatte 5, die an einem Schenkel der Ständerprofile 1 anliegt, vorgesehen sind. Die äußere Gipsbauplatte 4 ist jeweils an der Innenseite mit Stahlblech 6 belegt.

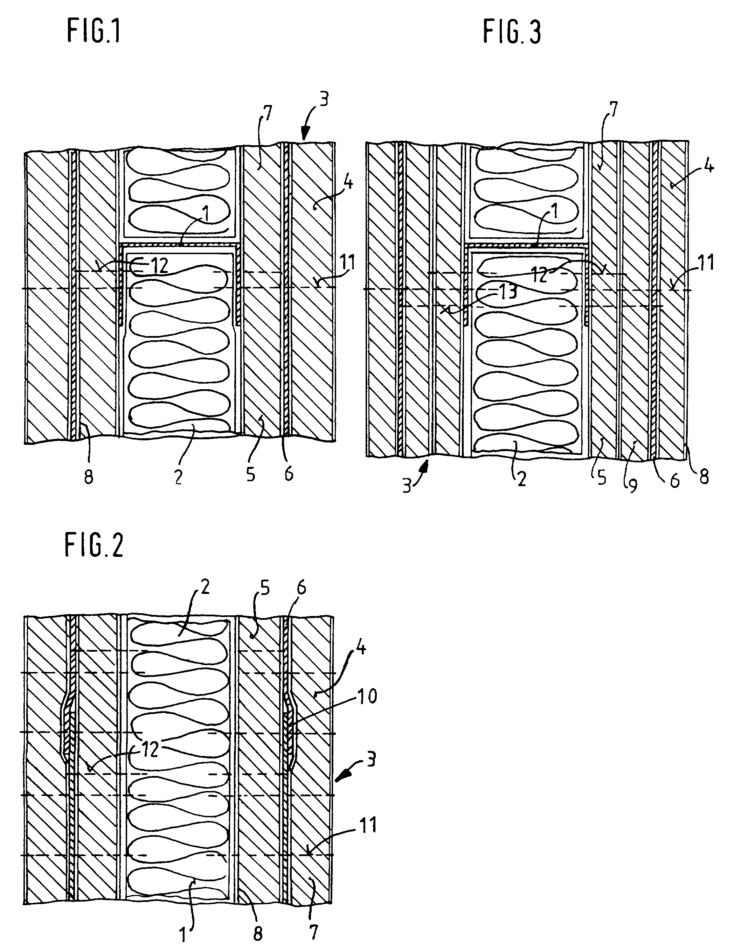

Die Gipsbauplatten weisen jeweils einen Plattenkern 7 auf, der an beiden Seiten mit einer Decklage 8 versehen ist. Bei der Ausführungsform gemäß Fig. 1 und 2 weist jede Wandschale 3 nur zwei Gipsbauplatten 4,5 auf, deren Plattenkern 7 etwas dicker als in Fig.3 ist und bei denen jede Decklage 8 von einem Glasfaservliesgelege gebildet ist, das ein Verbund aus einem Glasfaservlies und einem Glasfasergelege ist. Bei der Ausführungsform gemäß Fig. 3 weist jede Wandschale 3 drei Gipsbauplatten 4,5,9, also auch noch eine mittlere Gipsbauplatte 9, auf, deren Plattenkern 7 etwas dünner als in Fig. 1 und 2 ist und bei denen jede Decklage 8 von Karton gebildet ist. Bei beiden Ausführungsformen ist das Stahlblech der Brandwand aus Streifen zusammengesetzt und überlappen einander zwei benachbarte Stahlblech-Streifen entlang einem Bereich Fig.10, wie es in Fig. 10 gezeigt ist.

Bei beiden Ausführungsformen sind lange äußere Schrauben 11 vorgesehen, welche die gesamte Wandschale 3 und auch den anliegenden Schenkel der Ständerprofile 1 durchdringen. Diese langen äußeren Schrauben 11 sind relativ nahe beieinander angeordnet, wie es in Fig.2 angedeutet ist. Im Unterschied dazu sind innere Schrauben 12, welche relativ kurz sind und nur die innere Gipsbauplatte 5 am Ständerprofil 1 halten, relativ weit voneinander entfernt angeordnet. Dies trifft auch für Schrauben 13 zu, welche bei der Ausführungsform gemäß Fig.3 die mittlere Gipsbauplatte 9 durch die innere Gipsbauplatte 5 hindurch mit dem Ständerprofil 1 verbinden. Für eine Positionsfixierung des Stahlblechs 6 bei der Montage werden zusätzlich Schrauben oder auch Klebestellen vorgesehen.

Eine besonders zweckmäßige und vorteilhafte Ausführungsform liegt vor, wenn die Wandschale sowohl eine Gipsbauplatte umfaßt, die eine Gipskartonplatte ist, als auch eine Gipsbauplatte umfaßt, deren Decklagen Glasfaservlies oder -vliesgelege ist. Dies gibt neue Möglichkeiten verbesserter Eigenschaften der Brandwand vereinfacht zu erreichen.

## Patentansprüche

1. Brandwand mit Gipsbauplatten,
bei der Ständerprofile (1) Blech an mindestens einer Seite mit einer Wandschale (3) versehen sind, die eine innere, an den Ständerprofilen anliegende Gipsbauplatte (5) und eine äußere Gipsbauplatte (4) aufweist, deren Innenseite an einem zwischengeordneten Stahlblech (6) anliegt, und
bei der die innere Gipsbauplatte (5) mit inneren Schrauben (12) an die Ständerprofile (1) geschraubt ist und die äußere Gipsbauplatte (4) von äußeren Bolzenmitteln (11) gehalten ist, die durch die äußere Gipsbauplatte und das Stahlblech in die innere Gipsbauplatte ragen,
**dadurch gekennzeichnet**,
daß die Gipsbauplatten von der Art der beidseitig mit Decklagen (8) versehenen Gipsbauplatten (4,5,9) sind und die äußeren Bolzenmittel Schnellbauschrauben (11) sind, die durch die äußere Gipsbauplatte (4), das Stahlblech (6) und die innere Gipsbauplatte (5) hindurch an die Ständerprofile (1) ) geschraubt sind.

2. Brandwand nach Anspruch 1, **dadurch gekennzeichnet**, daß das zwischengeordnete Stahlblech (6) jeweils nach innen hin an der inneren Gipsbauplatte (5) anliegt und die Decklagen (8) der Gispbauplatten (5,6) jeweils von Glasfaservlies oder -vliesgelege gebildet sind.

3. Brandwand nach Anspruch 1 oder 2 **dadurch gekennzeichnet**, daß über die Länge jedes Ständerprofils (1) mindestens zwei, einander benachbarte Streifen von Stahlblech (6) vorgesehen sind und diese beiden Stahlblech-Streifen sich, in Richtung der Länge gesehen, einander überlappen (10).

4. Brandwand nach einem der vorhergehenden Ansprüche, **dadurch gekennzeichnet,** daß der Abstand zweier benachbarter äußerer Schrauben (11) voneinander beachtlich kleiner ist als der Abstand zweier benachbarter innerer Schrauben (12) voneinander.

5. Brandwand nach einem der vorhergehenden Ansprüche, **dadurch gekennzeichnet,** daß der Raum zwischen zwei benachbarten Ständerprofilen (1) mit einer nicht brennbaren oder schwer entflammbaren Füllstoffmatte (2) versehen ist.

## Claims

1. A fire wall with gypsum wallboards, wherein support sections (1) of sheet metal are provided with a wall shell (3) at at least one side, this wall shell (3) having an inner gypsum wallboard (5) which is in contact with the support sections and an outer gypsum wallboard (4) whose inner side is in contact with an intercalated steel plate (6), and wherein the inner gypsum wallboard (5) is screwed to the support sections (1) by means of inner screws (12) and the outer gypsum wallboard (4) is secured by outer bolts (11) which project into the inner gypsum wallboard through the outer gypsum wallboard and the steel plate, characterised in that the gypsum wallboards are the type of gypsum wallboards (4, 5, 9) provided with covering layers (8) at either side and the outer bolts are dry wall screws (11) which are screwed to the support sections (1) through the outer gypsum wallboard (4), the steel plate (6) and the inner gypsum wallboard (5).

2. A fire wall in accordance with Claim 1, characterised in that the intercalated steel plate (6) contacts with the inner gypsum wallboard (5) to the interior and the covering layers (8) of the gypsum wallboards (5, 6) are in each case formed from glass fibre non-woven material or from a layer of glass fibre non-woven material.

3. A fire wall in accordance with Claim 1 or 2, characterised in that at least two adjacent strips of steel plate (6) are provided over the length of each support section (1) and these two steel-plate strips overlap one another (10) when viewed in the longitudinal direction.

4. A fire wall in accordance with any one of the preceding Claims, characterised in that the distance between two adjacent outer screws (11) is considerably less than the distance between two adjacent inner screws (12).

5. A fire wall in accordance with any one of the preceding Claims, characterised in that the space between two adjacent support sections (1) is provided with an incombustible or flame-resistant filler mat (2).

## Revendications

1. Mur coupe-feu avec panneaux de plâtre,
dans le cas duquel les profilés en tôle (1) formant les poteaux sont munis, au moins d'un côté, d'une paroi (3) qui présente un panneau de plâtre intérieur (5) s'appuyant contre les profilés formant les poteaux et un panneau de plâtre extérieur (4) dont la face intérieure s'appuie contre une tôle d'acier intermédiaire (6), et
dans le cas duquel le panneau de plâtre intérieur (5) est vissé contre les profilés (1) formant les poteaux par des vis intérieures (12) et le panneau de plâtre extérieur (4) est maintenu par des moyens extérieurs (11), du type vis, qui pénètrent, à travers le panneau de plâtre extérieur et la tôle d'acier, dans le panneau de plâtre intérieur,
caractérisé
par le fait que les panneaux de plâtre sont du type des panneaux de plâtre (4,5,9) munis, des deux côtés, de couches de revêtement (8) et que les moyens extérieurs du type vis sont des vis à pose rapide (11) qui se vissent, à travers le panneau de plâtre extérieur (4), la tôle d'acier (6) et le panneau de plâtre intérieur (5), dans les profilés (1) formant les poteaux.

2. Mur coupe-feu selon la revendication 1, caractérisé par le fait que la tôle d'acier intermédiaire (6) s'appuie chaque fois, vers l'intérieur, contre le panneau de plâtre intérieur (5) et que chacune des couches de revêtement (8) des panneaux de plâtre (5,6) est formée d'un voile de fibres de verre ou d'un composite de fibres de verre et d'un voile de fibres de verre.

3. Mur coupe-feu selon la revendication 1 ou 2, caractérisé par le fait que, sur la longueur de chaque profilé (1) formant poteau, sont prévues au moins deux bandes de tôle d'acier (6), voisines l'une de l'autre, et que ces deux bandes de tôle d'acier se recouvrent l'une l'autre, vu dans le sens de la longueur.

4. Mur coupe-feu selon l'une des revendications précédentes, caractérisé par le fait que la distance entre deux vis extérieures (11) voisines est notablement inférieure à la distance entre deux vis intérieures (12) voisines.

5. Mur coupe-feu selon l'une des revendications précédentes, caractérisé par le fait que l'espace existant entre deux profilés voisins (1) formant les poteaux est muni d'un tapis de matériau de remplissage non combustible ou difficilement inflammable.
